# NOUVEAU FASCICULE DE BREVET EUROPEEN

(11) **EP 0 463 964 B2**
(45) Date de publication et mention de la décision concernant l'opposition: **01.07.1998**
(45) Mention de la délivrance du brevet: 28.09.1994
(21) Numéro de dépôt: 91401730.6
(22) Date de dépôt: 26.06.1991
(51) Int. Cl.: B06B 1/02

(54) **Système d'émission-réception d'ultrasons**
Anlage zur Erzeugung und zum Empfang von Ultraschall
System for emission and reception of ultrasound

(30) Priorité: 27.06.1990 FR 9008110
(43) Date de publication de la demande: 02.01.1992
(73) Titulaire: COMMISSARIAT A L'ENERGIE ATOMIQUE, 75015 Paris (FR)
(72) Inventeur: Bonis, Marc, F-91310 Montlhery (FR)
(74) Mandataire: Signore, Robert

(56) Documents cités:
- US-A- 4 566 331
- US-A- 4 623 838
- US-A- 4 696 425
- V.Màgori: 'Signal Processing for Smart Ultrasonic Sensors', Proc. 3rd. Annual European Computer Conference, Hamburg, May 8-12, 1989, pp. 3-21 à 3-26
- H.Ermert et al.: 'An Adaptive Ultrasonic Sensor for Object Identification', Ultrasonics Symposium, IEEE 1986, pp. 555-558
- J.Schmolke et al.: 'Generation of Optimal Input Signals for Ultrasound Pulse-Echo Systems', Ultrasonics Symposium, IEEE 1982, pp. 929-934
- P.R.Stephanishen et al.: 'Experimental Verification of the Impulse Response Method to evaluate Transient Acoustic Fields', J.Acoust.Soc.Am.69(6), June 1981, pp.1610-1617
- E.Oran Brigham et al.: 'An Iterative Technique for Determining Inverse Filters', IEEE-Transactions on Geoscience Electronics, vol. GE-6, no. 2, May 1968, pp. 86-96
- C.H.Chen et al.: 'High-Resolution Deconvolution Techniques and Their Applications in Ultrasonic NDE', International Journal of Imaging Systems and Technology, vol. 1, 1989, pp. 223-242
- C.H.Chen et al.: 'On Effective Spectrum-Based Ultrasonic Deconvolution Techniques for Hidden Flaw Characterization', J.Acoust.Soc.Am. 87(3), March 1990, pp. 976-987
- U.Tietze & Ch.Schenk: 'Halbleiter-Schaltungstechnik', 1989, Springer Verlag, pp. 374-377

## Description

La présente invention concerne un système d'émission-réception d'ultrasons.

Elle trouve des applications notamment dans le domaine du contrôle par ultrasons (contrôle de soudures, de pièces mécaniques ...).

Le document US-A-4 566 331 décrit un système d'émission-réception d'ultrasons et l'article de VMAGORI, "Signal Processing for Smart Ultrasonic Sensors", Proc.3rd Annual European Computer Confe- rence, Hamburg, May 8-12-1989, pp 3-21 to 3-26, chapitre 5, décrit un système d'émission-réception d'ultrasons selon le préambule de la revendication 1.

On connaît déjà divers systèmes d'émission-réception d'ultrasons.

Chacun de ces systèmes connus comprend un traducteur piézo-électrique destiné au moins à l'émission d'ondes ultrasonores ainsi qu'un générateur de courant électrique destiné à exciter le traducteur pour que celui-ci émette une onde ultrasonore.

Pour l'émission ultrasonore piézo-électrique dite "large bande" le générateur de courant d'excitation utilise toujours le principe de la charge (respectivement de la décharge) rapide de la capacité-shunt du traducteur, suivie de la décharge (respectivement de la charge) de forme exponentielle de cette capacité, à un rythme plus lent.

Ce dernier est généralement réglable et appelé "damping" dans les articles en langue anglaise.

La commutation rapide nécessaire à une telle émission ultrasonore était réalisée autrefois au moyen d'un thyristor.

Actuellement elle utilise un transistor MOS de puissance ou une pluralité de tels transistors.

On connaît également un système comportant un générateur de courant d'excitation appelé "émetteur unipolaire", qui a pour particularité de ne pas recharger instantanément la capacité-shunt du traducteur piézo- électrique, après avoir violemment déchargé cette capacité.

Dans cet émetteur unipolaire, la recharge de la capacité s'effectue lentement, après la réception de l'écho ultrasonore attendu.

Les systèmes d'émission-réception d'ultrasons connus présentent plusieurs inconvénients.

Tout d'abord, ces systèmes n'offrent aucune possibilité d'agir sur la forme de l'onde ultrasonore émise par le traducteur piézo-électrique, mis à part le réglage du front exponentiel-arrière de l'impulsion électrique d'excitation de ce traducteur ("damping") dont l'action sur la forme d'onde émise est relativement limitée.

Ensuite, l'amortissement du traducteur, qui est indispensable lorsqu'on veut travailler en large bande, est réalisé en grande partie par l'amortissement physique du matériau situé à l'arrière de la pastille piézo- électrique que comporte le traducteur.

Cet amortissement est toujours imparfait surtout dans le cas des traducteurs conçus pour travailler à de faibles fréquences.

Diverses solutions électriques mettant en oeuvre des transformateurs et des inductances sont utilisées pour compenser électriquement l'imperfection de cet amortissement physique et réaliser simultanément l'adaptation du traducteur à une ligne de transmission dont l'impédance caractéristique est en général égale à 50 ohms.

Dans certains cas, on arrive presque à atteindre un tel objectif, mais dans tous les cas, le filtre passif mis au point n'est valable que pour un traducteur donné et pour une forme d'onde ultrasonore donnée.

Enfin, comme il est théoriquement impossible de ramener, au moyen d'un filtre purement passif, l'impédance d'une pastille piézo-électrique à une valeur réelle de 50 ohms et ce, sur une large bande de fréquences, l' adaptation du traducteur est toujours imparfaite et le rendement des émetteurs d'ultrasons est par conséquent dégradé.

La présente invention a pour but de remédier aux inconvénients précédents.

Elle a pour objet un système d'émission-réception d'ultrasons conformément à la revendication 1.

Ainsi, le système objet de l'invention utilise un principe totalement différent des principes utilsès dans les systèmes connus, mentionnés plus haut.

Au lieu d'exciter le traducteur ultrasonore par un signal qui est quasiment toujours le même, le système objet de l'invention opère en deux temps.

Dans un premier temps, il détermine le signal d'excitation du générateur de courant qu'il comporte, en fonction d'un critère spécifié par l'utilisateur.

Dans un second temps, le système engendre le courant électrique correspondant à ce signal d'excitation (qui a été mémorisé) afin d'exciter le traducteur piézo-électrique et effectuer un contrôle par ultrasons.

Le critère que doit spécifier l'utilisateur porte sur la forme d'onde ultrasonore issue de l'objet de référence après interaction de ce dernier avec l'onde ultrasonore engendrée par le traducteur excité.

Dans le cas où l'on travaille en réflexion, l'objet de référence est un réflecteur de référence et le critère que doit spécifier l'utilisateur est la forme de l'écho ultrasonore fourni par ce réflecteur de référence.

L'objet de référence peut être par exemple un plan "infini", un demi-plan "infini" (bord de fissure), un disque, une bille, un cône, un trou à fond plat, un défaut artificiel ou un défaut réel dans une pièce mécanique.

La forme d'onde ultrasonore issue de l'objet de référence peut être définie sous forme temporelle (en fonction du temps) ou sous forme spectrale (en fonction de la fréquence des ultrasons) suivant que l'utilisateur souhaite imposer des contraintes sur le contenu temporel ou sur le contenu spectral de l'onde ultrasonore issue de l'objet de référence.

L'homme du métier est familiarisé avec le passage de la forme temporelle à la forme spectrale d'une onde et vice versa (transformations de Fourier directe et inverse).

On peut dire que le système objet de l'invention est un système "intelligent" en ce sens qu'il s'adapte aussi bien aux imperfections physiques du traducteur piézo- électrique utilisé qu'aux conditions du contrôle par ultrasons et qu'il détermine l'excitation du traducteur piézo- électrique en vue de recevoir une onde ultrasonore de forme fixée par l'utilisateur pour un objet de référence choisi.

La présente invention permet de constituer une banque de données (signaux d'excitation du générateur de courant) permettant, lors du contrôle d'une pièce par ultrasons, pièce dont les défauts sont en général de type connu, de reconnaître ces défauts.

De préférence, le générateur de courant comprend au moins une source bidirectionnelle de courant électrique pour exciter le traducteur.

Chaque source bidirectionnelle peut être constituée par deux sources unidirectionnelles de courant électrique.

Chaque source unidirectionelle peut comprendre un transistor MOS.

Le traducteur piézo-électrique peut être destiné à l'émission et à la réception d'ondes ultrasonores.

Selon un mode de réalisation particulier du système objet de l'invention, le générateur de courant est prévu pour exciter le traducteur de façon dissymétrique.

Selon un autre mode de réalisation particulier, le générateur de courant comprend deux sources bidirectionnelles de courant électrique, prévues pour exciter le traducteur de façon symétrique.

Dans le cas où le traducteur est destiné à l'émission et à la réception d'ondes ultrasonores, les moyens d'émission-réception peuvent comprendre en outre :
- des moyens d'amplification des signaux détectés par ces moyens d'émission-réception, et
- des moyens de commutation aptes à isoler les moyens d'amplification du traducteur lorsque ce dernier émet une onde ultrasonore.

Dans le cas en question, les moyens d'émission- réception peuvent comprendre en outre :
- des moyens de commande du générateur de courant, ces moyens de commande recevant en entrée des signaux issus des moyens électroniques de traitement et destinés à l'excitation du générateur de courant et fournissant en sortie des signaux d'excitation du générateur de courant, et
- d'autres moyens de commutation aptes à isoler les moyens de commande du traducteur lorsque ce dernier reçoit une onde ultrasonore.

De préférence, afin de diminuer le nombre des itérations nécessaires à la détermination du signal d'excitation qui est associé à l'objet de référence et qui correspond à la forme d'onde ultrasonore déterminée, les moyens électroniques de traitement sont en outre prévus pour déterminer une transformation du signal d'excitation du générateur de courant, dont la composition avec la fonction de transfert H est approximativement linéaire.

Dans ce cas, le système objet de l'invention peut comprendre en outre une résistance électrique et un commutateur à deux positions, à savoir :
- une première position dans laquelle ce commutateur relie le générateur de courant à la résistance électrique pour envoyer dans cette dernière le courant fourni par le générateur de courant, et
- une deuxième position dans laquelle ce commutateur relie le générateur de courant au traducteur pour exciter ce dernier, les moyens électroniques de traitement étant alors aptes à déterminer, lorsque le commutateur est dans la première position, et à mémoriser une transformation du signal d'excitation du générateur de courant, qui permet au courant fourni par ce générateur de courant de varier linéairement en fonction du signal d'excitation du générateur de courant.

La présente invention sera mieux comprise à la lecture de la description d'exemples de réalisation donnés ci-après, à titre purement indicatif et nullement limitatif, en référence aux dessins annexés sur lesquels :
- les figures 1 à 3 illustrent schématiquement des systèmes conformes à la présente invention,
- la figure 4 illustre schématiquement un algorithme de calcul qui est mis en oeuvre dans les systèmes représentés sur les figures 1 à 3,
- la figure 5 est une vue schématique d'un système conforme à l'invention permettant une accélération de cet algorithme,
- la figure 6 est une vue schématique d'un mode de réalisation particulier du système objet de l'invention, qui utilise des transistors bipolaires pour exciter de manière dissymétrique le traducteur piézo- électrique du système représenté sur cette figure,
- la figure 7 est une vue schématique d'un autre mode de réalisation particulier qui utilise des transistors MOS pour exciter de manière dissymétrique le traducteur piézo-électrique du système représenté sur cette figure,
- la figure 8 illustre schématiquement un système conforme à l'invention qui utilise une excitation symétrique du traducteur du système,
- les figures 9 à 11 sont des vues schématiques de modes de réalisation particuliers du système objet de l'invention, qui utilisent chacun une excitation symétrique du traducteur piézo-électrique qu'ils comportent,
- la figure 12 illustre schématiquement un système conforme à l'invention utilisant un traducteur piézo- électrique émetteur et un traducteur piézo-électrique récepteur qui travaillent en réflexion, et
- la figure 13 illustre schématiquement un autre système conforme à l'invention utilisant un traducteur piézo-électrique émetteur et un traducteur piézo- électrique récepteur qui travaillent en transmission.

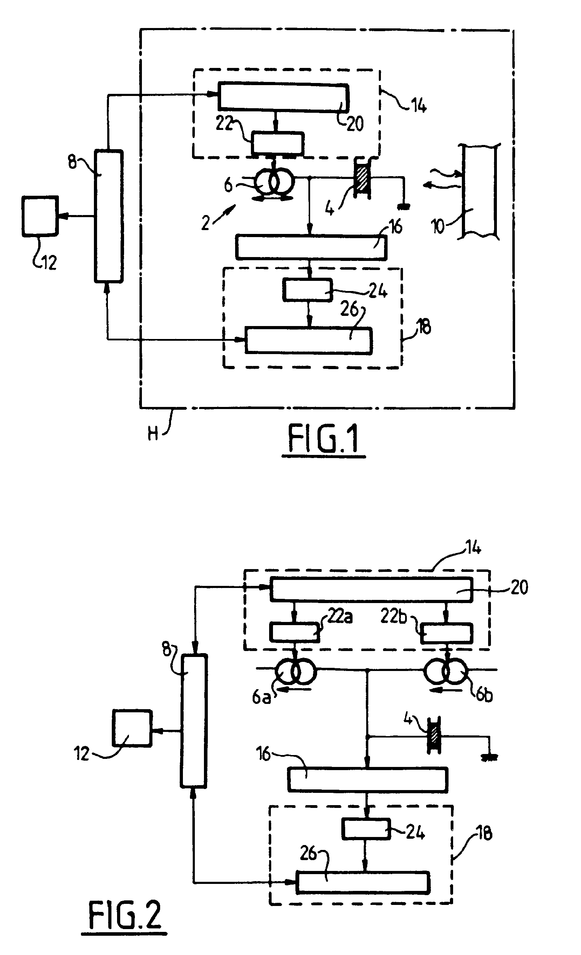

Le système conforme à l'invention, qui est schématiquement représenté sur la figure 1 comprend des moyens d'émission-réception d'ultrasons 2 qui comportent :
- un traducteur piézo-électrique 4 destiné à l'émission et à la réception d'ondes ultrasonores, et
- un générateur de courant électrique 6 destiné à exciter le traducteur pour que celui-ci émette une onde ultrasonore.

Le système représenté sur la figure 1 comprend aussi des moyens électroniques de traitement 8 qui sont aptes à déterminer de façon approchée et à mémoriser un signal numérique d'excitation du générateur de courant 6 (qui excite alors à son tour le traducteur piézo-électrique).

Ce signal numérique d'excitation est associé à un réflecteur de référence 10 et calculé par les moyens électroniques de traitement 8 pour conduire à une forme déterminée d'écho ultrasonore détecté, cet écho étant émis par le réflecteur de référence lorsque ce dernier reçoit une onde ultrasonore du traducteur piézo- électrique excité.

Bien entendu, ces calculs peuvent être faits pour une pluralité de réflecteurs de référence, ce qui conduit à une pluralité de signaux numériques d'excitation du générateur de courant 6, chaque signal d'excitation étant associé à un réflecteur de référence.

On constitue ainsi une banque de données dans les moyens électroniques de traitement 8.

Cette banque de données est utilisable pour reconnaître ensuite les défauts de pièces contrôlées par ultrasons grâce au système de la figure 1 (à condition que ces défauts correspondent à des signaux d'excitation faisant partie de la banque de données).

Les résultats du contrôle sont affichés sur des moyens de visualisation 12 dont sont munis les moyens électroniques de traitement 8.

Les moyens d'émission-réception 2 comprennent aussi :
- des moyens 14 de commande du générateur de courant 6,
- des moyens 16 d'amplification des signaux électriques fournis par le traducteur 4 lorsque celui-ci détecte un écho ultrasonore, et
- des moyens 18 de numérisation des signaux amplifiés.

Les moyens de commande 14 reçoivent en entrée les signaux numériques issus des moyens électroniques de traitement 8 et transforment ces signaux numériques en des signaux analogiques destinés à commander le générateur de courant 6.

Les moyens de commande 14 comprennent une interface logique et micro-informatique 20 suivie par des moyens 22 de conversion numériqueanalogique.

L'interface 20 reçoit en entrée les signaux numériques issus des moyens électroniques de traitement 8 et les moyens de conversion 22 fournissent les signaux analogiques de commande du générateur de courant 6.

Les moyens de numérisation 18 comprennent des moyens 24 de conversion analogique-numérique suivis par une interface logique et micro-informatique 26.

Les moyens de conversion 24 reçoivent en entrée un signal analogique issu des moyens d'amplification 16 et l'interface 26 fournit aux moyens électroniques de traitement 8 un signal numérique correspondant à ce signal analogique.

C'est précisément un tel signal numérique qui est associé au réflecteur de référence 10 par les utilisateurs du système représenté sur la figure 1 et en fonction duquel les moyens électroniques de traitement 8 déterminent un signal numérique d'excitation du générateur de courant 6 conduisant en retour au signal numérique associé à ce réflecteur de référence et appelé par la suite "signal de référence".

Un traducteur piézo-électrique utilisable pour l'émission ultrasonore "large bande" de forte puissance, utilisée dans le contrôle de fortes épaisseurs d'acier, a une capacité-shunt dont la valeur dépasse une dizaine de nanofarads.

Par conséquent, lorsque le traducteur 4 est un traducteur destiné à l'émission ultrasonore large bande, on utilise de préférence, pour exciter de manière analogique le traducteur 4, un générateur de courant constitué par une source de courant qui est bidirectionnelle, linéaire, à large bande et à forte intensité maximale.

Pour réaliser une telle source bidirectionnelle 6, on peut utiliser deux sources unidirectionnelles de courant 6a et 6b comme on le voit sur la figure 2.

Dans ce cas, les moyens de conversion numérique- analogique 22 sont constitués par deux convertisseurs analogique-numérique 22a et 22b qui sont respectivement associés aux sources unidirectionnelles 6a et 6b comme on le voit aussi sur la figure 2.

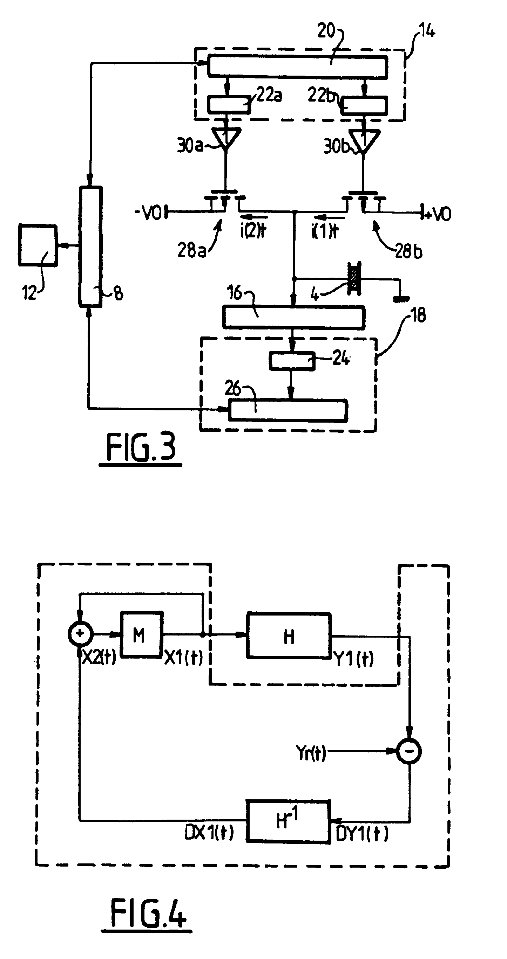

Enfin, pour obtenir des courants électriques de grande intensité, on utilise de préférence, en tant que sources unidirectionnelles de courant 6a et 6b, respectivement des transistors MOS de puissance 28a et 28b comme on le voit sur la figure 3.

On utilise par exemple une excitation dissymétrique du traducteur piézo-électrique 4, comme on le voit sur les figures 1 à 3.

Sur cette figure 3, on voit que le transistor 28a est un transistor MOS à canal N dont la source est portée à un potentiel négatif -VO et que le transistor 28b est un transistor MOS à canal P dont la source est portée à un potentiel positif +VO.

Les drains de ces transistors 28a et 28b sont reliés l'un à l'autre ainsi qu'à une borne du traducteur piézo- électrique 4 dont l'autre borne est mise à la masse.

La grille du transistor 28a est reliée à la sortie du convertisseur numérique-analogique 22a par l'intermédiaire d'un étage adaptateur de puissance 30a.

De même, la grille du transistor 28b est reliée à la sortie du convertisseur numérique-analogique 22b par l'intermédiaire d'un étage adaptateur de puissance 30b.

On voit aussi que la borne du traducteur 4, qui est reliée au drain des deux transistors 28a et 28b est également reliée à l'entrée des moyens d'amplification 16.

On va maintenant expliquer, à l'aide de la figure 4, l'algorithme convergent qui est mis en oeuvre dans les moyens électroniques de traitement 8 pour déterminer le signal numérique d'excitation conduisant au signal numérique de référence imposé par les utilisateurs du système.

Ce signal numérique de référence est noté Yr(t), t représentant le temps.

Tout ce qui est entouré par des pointillés sur la figure 4 correspond à des calculs effectués dans les moyens électroniques de traitement, ou calculateur, 8.

Sur la figure 4, le bloc M représente un étagetam- pon de mémorisation (partie de la mémoire du calculateur) dans lequel est stocké le résultat obtenu après chaque itération de l'algorithme.

Le bloc H représente l'ensemble du processus physique non linéaire qui a lieu entre l'obtention du résultat Xk(t) de l'étape k de la suite des itérations, qui conduit au signal numérique d'excitation du générateur de courant 6, et l'obtention du signal numérique Yk(t) fourni au calculateur 8 par la sortie des moyens de numérisation 18 après détection de l'écho ultrasonore induit par le signal Xk(t), k étant un nombre entier au moins égal à 1.

Ce processus physique correspond à la partie de la figure 1 qui est délimitée par un trait mixte.

Sur la figure 4, le bloc H-¹ représente la fonction inverse, ou fonction réciproque, notée H-¹, de la fonction de transfert, notée H, correspondant à ce processus physique.

Pour la mise en oeuvre de l'algorithme dans le calculateur 8, l'étage-tampon M est initialement chargé par un signal numérique Xo(t) convenablement choisi - d'une manière expliquée par la suite - pour couvrir la totalité de la bande spectrale-cible.

Un tir initial est alors effectué avec Xo(t), ce qui engendre un écho ultrasonore initial qui, après détection, amplification et numérisation, fournit un signal Yo(t) qui est donc égal à H(Xo(t)).

Connaissant Xo(t) et Yo(t), le calculateur 8 détermine et mémorise la fonction H-¹ en supposant que la fonction H est un opérateur linéaire et invariant dans le temps c'est-à-dire indépendant du temps.

Ensuite (étape 1 de la suite des itérations), le calculateur 8 détermine et charge dans l'étagetampon M le signal X1 (t) tel que :

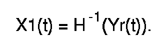

Compte tenu de la non-linéarité de la fonction de transfert physique H, X1(t) n'est qu'une valeur approchée du signal d'excitation recherché.

Un tir est alors effectué avec le signal X1 (t), ce qui permet d'obtenir un signal Y1 (t) égal à H(X1 (t)).

A partir de Y1 (t) et de Yr(t), le calculateur 8 détermine un signal d'erreur DY1 (t) tel que :

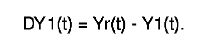

A partir de ce signal d'erreur DY1 (t), qui résulte de la non-linéarité de la fonction de transfert H, le calculateur 8 détermine une correction DX1 (t) du signal X1 (t), telle que :

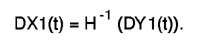

Ensuite (étape 2 de la suite des itérations), le calculateur 8 détermine une nouvelle approximation X2(t) du signal d'excitation recherché, telle que : 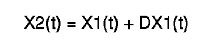 et charge ce signal X2(t) dans l'étage-tampon M.

Un tir est alors effectué avec le signal X2(t) pour aboutir à une approximation X3(t) du signal d'excitation recherché, et ainsi de suite.

La suite de terme général Xk(t) converge et les itérations sont arrêtées à une étape n à laquelle la norme du signal d'erreur DYn(t) est inférieure à une valeur spécifiée par les utilisateurs.

Le signal d'erreur DYn(t) étant un ensemble de valeurs numériques, on peut prendre comme norme la plus grande des valeurs absolues de ces valeurs numériques.

La valeur spécifiée par les utilisateurs est par exemple égale à un millième de l'amplitude-crête.

Le signal Xn(t) est mémorisé dans le calculateur 8 et pris comme signal d'excitation du générateur de courant pour effectuer tout ou partie d'un contrôle ultrasonore d'une pièce et, si le résultat de ce contrôle correspond à Yr(t), on en déduit que le réflecteur de référence 10 est présent dans la pièce contrôlée.

La convergence de la suite de terme général Xk(t) est d'autant plus rapide que la fonction de transfert H est faiblement non-linéaire.

On explique ci-après le choix du signal Xo(t) qui est initialement chargé dans l'étage-tampon M.

Ce signal Xo(t) est en fait une suite de valeurs numériques formant un échantillon formé en respectant les règles imposées par le théorème de Shannon.

Le signal Xo(t) est choisi de façon que l'étendue de son support spectral SXo couvre au moins l'étendue du support spectral Sr du signal de référence Yr(t) lui- même choisi égal au support spectral SH de la fonction de transfert H.

Par "support spectral d'un signal x(t)", on entend l'intervalle des fréquences f en dehors duquel la transformée de Fourier x (f) de x(t) est quasinulle c'est-à-dire par exemple inférieure au millième de l'amplitude maximale.

On remarquera que le support spectral SH de H est une donnée physique qui dépend notamment du traducteur de l'appareillage électronique utilisé et du réflecteur de référence.

On choisit par exemple un signal Xo(t) tel que :

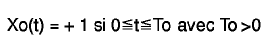

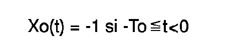

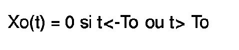

On excite le traducteur à l'aide de ce signal Xo(t) choisi et l'on détermine le support spectral SYo du signal Yo(t) correspondant à Xo(t).

Si SYo est strictement inclus dans SXo, alors on est sûr que SYo est égal à SH.

Si SYo est égal à SXo, on excite à nouveau le traducteur avec un signal Xo(t) dont le support spectral est plus étendu, ce qui correspond à une diminution de To dans l'exemple donné plus haut, et ainsi de suite jusqu'à ce que l'on obtienne un signal Yo(t) tel que SYo soit strictement inclus dans SXo.

On connaît alors SH : il est égal à ce support spectral SYo.

Ceci étant fait, il est possible de choisir le signal de référence Yr(t).

Pour ce faire, on commence par choisir une forme d'écho de référence c'est-à-dire une fonction Yr(t) dont l'échelle des temps et l'amplitude sont des paramètres à fixer.

On choisit par exemple une fenêtre de Hanning en tant que forme d'écho de référence.

La connaissance de SH permet de fixer les paramètres en question puisque le support spectral Sr de Yr(t) a été choisi égal à SH.

De préférence, on accélère la convergence de la suite de terme général Xk(t), c'est-à-dire qu'on réduit le nombre d'étapes de la suite des itérations, notamment dans le cas où la source de courant bidirectionnelle, qui fournit un courant électrique i(t) destiné à exciter le traducteur piézoélectrique 4, est constituée par deux transistors MOS de puissance formant respectivement deux sources unidirectionnelles de courant (cas de la figure 3).

On sait en effet qu'un transistor MOS de puissance est un dispositif électronique dont la transconductance est une fonction non-linéaire.

Pour accélérer la convergence, le calculateur 8 détermine, préalablement aux calculs conduisant à Xn(t), une transformation du signal X(t), engendré par le calculateur 8 pour l'excitation du traducteur 4, transformation qui est telle que l'application de la fonction de transfert H au signal ainsi transformé donne un signal Y(t) qui soit une fonction faiblement non-linéaire de X(t).

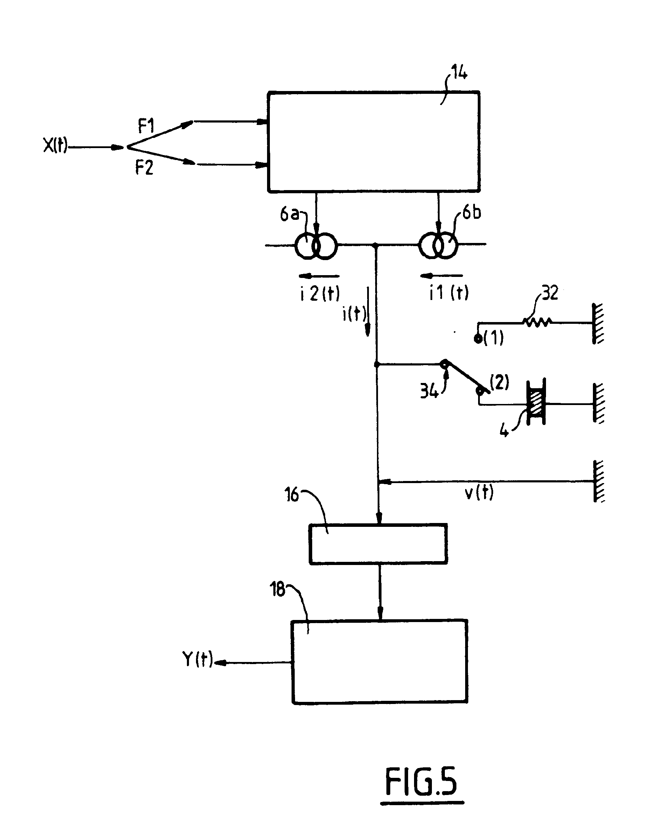

Pour ce faire, on munit le système d'une résistance électrique 32 (figure 5), qui peut être de l'ordre de 50 ohms, et d'un commutateur 34 à deux positions notées (1) et (2).

Ce commutateur 34 est prévu pour envoyer le courant i(t) soit à une borne de la résistance 32 dont l'autre borne est mise à la masse (position (1) du commutateur 34) soit à une borne du traducteur piézoélectrique 4 dont l'autre borne est mise à la masse (position (2) du commutateur 34).

On remarquera que le courant i(t) est la somme d'un courant électrique i1(f) positif, fourni par la source 6b, et d'un courant électrique i2(t) négatif, fourni par la source 6a.

La tension électrique, qui apparaît entre les bornes du traducteur piézoélectrique 4 lorsque ce dernier reçoit un écho ultrasonore du réflecteur de référence, est notée v(t).

Cette tension v(t) est amplifiée par les moyens d'amplification 16 (amplificateur de tension).

Le passage du commutateur 34 de la position (1) à la position (2) et inversement peut être commandé par le calculateur 8.

L'expérience montre que la conversion de i(t), par le traducteur piézoélectrique 4, en un ébranlement ultrasonore, la propagation de cet ébranlement, la réflexion de ce dernier sur un objet (défaut par exemple), la conversion inverse de l'écho reçu par le traducteur piézoélectrique 4 en une tension électrique v(t) et enfin l'amplification de cette tension v(t) par les moyens d'amplification 16 (amplificateur de tension) sont des opérations faiblement non-linéaires.

Par conséquent, pour accélérer la convergence, le calculateur 8 détermine en fait, préalablement aux calculs conduisant à Xn(t), une transformation du signal X(t), engendré par le calculateur 8 pour l'excitation du traducteur 4, transformation qui est telle que l'application de la fonction de transfert H au signal ainsi transformé donne un courant i(t) qui soit une fonction faiblement non-linéaire de X(t).

Dans le cas des figures 2 et 3 (utilisation de deux sources unidirectionnelles de courant), la transformation est une double transformation qui consiste en deux fonctions de correction F1 et F2 respectivement associées à il (t) et à i2(t).

Pour déterminer les fonctions de correction F1 et F2, on met le commutateur 34 en position (1).

Dans cette position (1), le courant i(t) fourni par la source bidirectionnelle de courant est envoyé à la résistance électrique (pure) 32 de sorte que le signal Y(t) est proportionnel à i(t).

Pour déterminer les fonctions de correction F1 et F2, on utilise un signal X(t) du type rampe, tel que :
- si X(t) est positif, i(t) soit positif, i(t) étant alors égal à i1 (t), et
- si X(t) est négatif, i(t) soit négatif, i(t) étant alors égal à i2(t).

Dans un premier temps, le calculateur 8 envoie ce signal X(t) particulier à chacun des deux convertisseurs numérique-analogique 22a et 22b des moyens de commande, ou générateur, 14 (par l'intermédiaire de l'interface 20) et reçoit le signal Y(t) correspondant qui est proportionnel à i(t).

Le calculateur 8 est alors capable de déterminer deux fonctions non linéaires G1 et G2 telles que :

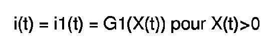

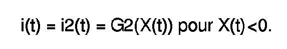

La fonction G1 (respectivement G2) correspond à la non-linéarité de la source unidirectionnelle 6b (respectivement 6a).

Dans un deuxième temps, le calculateur 8 détermine et mémorise les fonctions de correction F1 et F2 telles que : 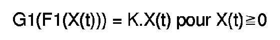 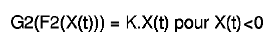 K étant une constante de proportionnalité.

Après que les fonctions de correction F1 et F2 ont été déterminées et mémorisées, le commutateur 34 est placé en position (2).

La source de courant 6a, 6b alimente alors le traducteur piézoélectrique 4 et l'on place ce dernier devant le réflecteur de référence 10 pour déterminer le signal Xn(t).

A chaque étape k de la suite des itérations, le signal Xk(t) est préalablement transformé par les fonctions F1 et F2 avant que le processus H ne lui soit appliqué, d'où une convergence plus rapide qu'en l'absence de transformation préalable par les fonctions F1 et F2.

Dans tout ce qui précède, divers signaux considérés, tels que X(t), Xk(t), Y(t), Yk(t), ont été notés sous la forme de fonctions continues f(t) du temps t mais, en fait, les calculs sont effectués sur les signaux "à temps discret" qui leur sont associés, c'est-à-dire sur les suites de nombres du type f(m.Te), où Te représente une période d'échantillonnage (fonction de l'étendue spectrale des signaux traités).

Cette association est bien entendu réalisée en respectant les règles imposées par le théorème de Shannon.

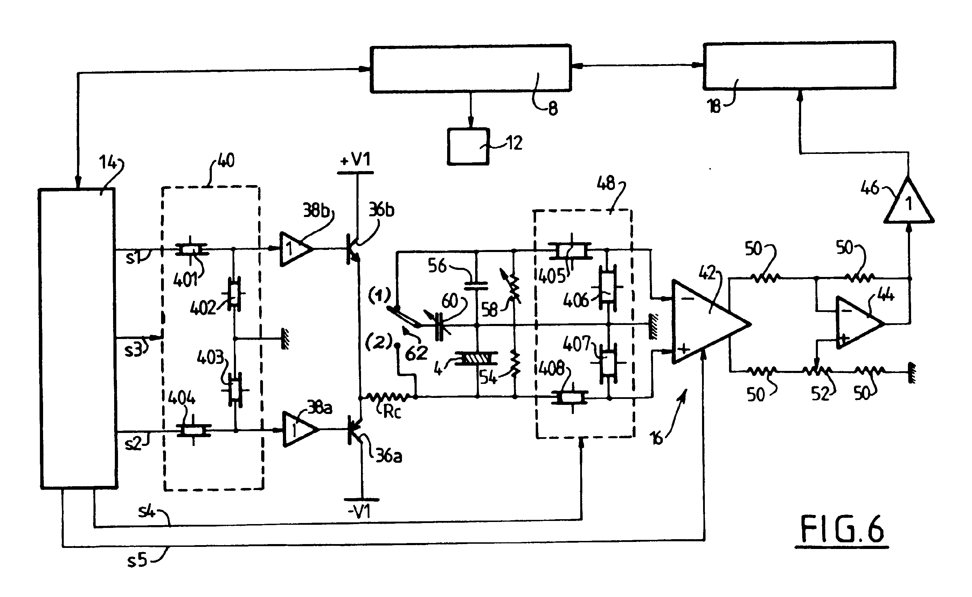

Sur la figure 6, on a représenté schématiquement'un mode de réalisation particulier du système objet de l'invention, dans lequel le traducteur piézoélectrique 4 est excité de manière dissymétrique, l'une de ses bornes étant mise à la masse.

De plus, le système schématiquement représenté sur la figure 6 comprend une source bidirectionnelle de courant qui est réalisée au moyen de deux transistors bipolaires de puissance 36a et 36b.

Ces transistors 36a et 36b sont commandés par le calculateur 8, par l'intermédiaire du générateur 14, et les signaux fournis par le traducteur 4 sont amplifiés par les moyens d'amplification 16 puis envoyés au calculateur par l'intermédiaire du numériseur 18.

Le transistor 36a (respectivement 36b) reçoit des signaux de commande de la part du générateur 14 par l'intermédiaire d'un étage d'adaptation de puissance 38a (respectivement 38b).

Un commutateur analogique d'isolation 40, dont la fonction sera expliquée par la suite, est interposé entre les sorties du générateur 14 et les étages d'adaptation de puissance 38a et 38b.

Les moyens d'amplification 16 comprennent un préamplificateur 42 suivi par un amplificateur 44 dont la sortie fournit des signaux amplifiés au numériseur 18 par l'intermédiaire d'un étage d'adaptation de puissance 46.

Un autre commutateur analogique d'isolation 48, dont la fonction sera expliquée par la suite, est interposé entre le traducteur 4 et le préamplificateur 42.

Dans l'exemple représenté sur la figure 6, le transistor 36a est de type PNP et le transistor 36b est de type NPN ; les émetteurs de ces transistors sont reliés l'un à l'autre, le collecteur du transistor 36a est porté à un potentiel négatif -V1 tandis que le collecteur du transistor 36b est porté à un potentiel positif +V1 ; la base du transistor 36a est relié à la sortie de l'étage d'adaptation 38a tandis que la base du transistor 36b est reliée à la sortie de l'étage d'adaptation 38b.

A titre purement indicatif et nullement limitatif, dans l'exemple représenté sur la figure 6,
- le générateur 14 est le générateur de fonctions arbritraires à double sortie, commercialisé par la société LECROY sous la référence 9100,
- le numériseur 18 est réalisé avec un appareil qui est commercialisé par la société TEKTRONIX sous la référence 7612,
- chacun des commutateurs 40 et 48 est du genre de celui qui est commercialisé par la société HARRIS sous la référence HI-201 HS,
- chacun des étages d'adaptation 38a, 38b et 46 est du genre de celui qui est commercialisé pu la société HARRIS sous la référence HA-5002,
- le préamplificateur 42 est un préamplificateur vidéo différentiel à gain programmable et à sortie différentielle, du genre de celui qui est commercialisé par la société RTC sous la référence NE 592 (gains 0,100 et 400), et
- l'amplificateur 44 est un amplificateur différentiel du genre de celui qui est commercialisé par la société HARRIS sous la référence HA-2539.

L'utilisation du générateur de la société LECROY et de l'appareil de la société TEKTRONIX que l'on a mentionnés ci-dessus, permet d'engendrer et de numériser des signaux jusqu'à une cadence de 1 00x1 06 échantillons par seconde, ce qui couvre la plupart des applications dans le domaine du contrôle ultrasonore.

Dans l'exemple représenté sur la figure 6, le commutateur analogique d'isolation 40 est composé de quatre commutateurs élémentaires 401, 402, 403 et 404 ; de même, le commutateur analoqique d'isolation 48 est composé de quatre commutateurs élémentaires 405, 406, 407 et 408.

Une borne du commutateur 401 est reliée à la première sortie s1 du générateur 14 et l'autre borne de ce commutateur 401 est reliée à l'entrée de l'étage d'adaptation 38b ainsi qu'à une borne du commutateur 402 dont l'autre borne est reliée à une borne du commutateur 403 et mise à la masse.

L'autre borne de ce commutateur 403 est reliée à l'entrée de l'étage d'adaptation 38a ainsi qu'à une borne du commutateur 404 dont l'autre borne est reliée à la deuxième sortie s2 du générateur 14.

On voit sur la figure 6 que le générateur 14 a des sorties auxiliaires s3, s4 et s5 qui sont destinées à fournir respectivement des signaux logiques de commande du commutateur 40, des signaux logiques de commande du commutateur 48 et des signaux de commande du gain du préamplificateur 42.

Ce dernier et l'amplificateur 44 sont associés à un montage comprenant quatre résistances électriques identiques 50 ainsi qu'un potentiomètre 52.

L'entrée inverseuse de l'amplificateur 44 est reliée à la sortie de cet amplificateur 44 par l'intermédiaire de la première de ces résistances 50 et à l'une des sorties différentielles du préamplificateur 42 par l'intermédiaire de la deuxième de ces résistances 50.

L'entrée non-inverseuse de l'amplificateur 44 est reliée au curseur du potentiomètre 52 et une borne de ce dernier est mise à la masse par l'intermédiaire de la troisième des résistances 50 tandis que l'autre borne du potentiomètre 52 est reliée à l'autre sortie différentielle du préamplificateur 42 par l'intermédiaire de la quatrième des résistances 50.

Il s'agit d'un montage sommateur pour amplificateur différentiel, montage classique dont les quatre résistances peuvent être de l'ordre de 1 kilo ohms.

Le potentiomètre 52 permet d'ajuster la composante continue du signal envoyé au numériseur 18 par l'amplificateur 44.

Le traducteur piézoélectrique 4 est muni d'une résistance électrique 54, par exemple de l'ordre 50 ohms, qui est montée entre les bornes du traducteur 4 et qui a pour fonction de polariser l'entrée non-inverseuse du préamplificateur 42.

Le traducteur 4 est également associé à un circuit comportant un condensateur 56 et une résistance électrique ajustable 58, ce circuit se comportant comme le traducteur et étant destiné à rendre sensiblement identiques les impédances qui sont connectées aux entrées du préamplificateur 42.

Une borne du commutateur 405 est reliée à l'entrée inverseuse du préamplificateur 42 ainsi qu'à une borne du commutateur 406 dont l'autre borne est mise à la masse et reliée à une borne du commutateur 407.

L'autre borne de ce commutateur 407 est reliée à l'entrée non-inverseuse du préamplificateur 42 ainsi qu'à une borne du commutateur 408.

Une borne du traducteur 4 est mise à la masse tandis que son autre borne est reliée à l'autre borne du commutateur 408 ainsi qu'au point commun aux émetteurs des transistors 36a et 36b, par l'intermédiaire d'une résistance Rc dont la fonction sera précisée par la suite.

On voit sur la figure 6 que le traducteur piézoélectrique 4 est également associé à un condensateur ajustable 60 ainsi qu'à un interrupteur 62 à deux positions.

Une borne du condensateur 56 et une borne de la résistance ajustable 58 sont mises à la masse tandis que leurs autres bornes sont reliées à l'autre borne du commutateur 405 et à une borne de l'interrupteur 62.

Une autre borne de ce dernier est reliée à une borne du condensateur ajustable 60 dont l'autre borne est mise à la masse.

Une autre borne de l'interrupteur 62 est reliée à la connexion entre la résistance Rc et le traducteur piézoélectrique 4.

Lorsque la capacité du condensateur 56 est inférieure à celle du traducteur 4, l'interrupteur 62 est placé en position (1), de manière à rajouter la capacité du condensateur 60 à celle du condensateur 56.

Au contraire, lorsque la capacité du condensateur 56 est supérieure à celle du traducteur 4, l'interrupteur 62 est placé en position (2), de manière à rajouter la capacité du condensateur 60 à celle du traducteur 4.

Le commutateur d'isolation 40 a pour fonction d'isoler les étages d'adaptation 38a et 38b du bruit résiduel du générateur 14 lorsque ce dernier est au repos, c'est-à-dire après qu'il ait envoyé aux transistors 38a et 38b des signaux d'excitation.

En effet, les signaux fournis par le traducteur 4, lorsqu'il reçoit un écho ultrasonore, sont faibles et il convient donc de s'affranchir du bruit résiduel du générateur 14.

Le commutateur d'isolation 48 a pour fonction de déconnecter le traducteur 4 du préamplificateur 42 lorsque le traducteur est dans sa phase d'émission car le préamplificateur 42 ne tolère que des signaux d'entrée de faible amplitude alors que le traducteur fournit des signaux de grande amplitude lorsque ce traducteur est dans sa phase d'émission.

On précise ci-après les états des huit commutateurs 401 à 408 lors des phases d'émission, d'attente et de réception du traducteur, la phase d'attente correspondant au temps de propagation des signaux ultrasonores du traducteur au réflecteur de référence et de ce dernier au traducteur.

En phase d'émission, les commutateurs 401, 404, 406 et 407 sont fermés tandis que les commutateurs 402, 403, 405 et 408 sont ouverts.

En phase d'attente, les commutateurs 402 et 403 sont fermés, les commutateurs 406 et 407 restent fermés, les commutateurs 401 et 404 sont ouverts et les commutateurs 405 et 408 restent ouverts.

En phase de réception, les commutateurs 402 et 403 restent fermés, les commutateurs 405 et 408 sont fermés, les commutateurs 401 et 404 restent ouverts et les commutateurs 406 et 407 sont ouverts.

On précise maintenant la fonction de la résistance Rc.

La valeur maximale du courant que peut fournir la source réalisée avec les transistors bipolaires 38a et 38b est limitée par le courant de saturation de ces transistors bipolaires.

Afin de maintenir l'étage de puissance formé par ces deux transistors dans une zone de fonctionnement approximativement linéaire, il convient d'insérer une résistance électrique de faible valeur, qui est précisément la résistance Rc, entre cet étage de puissance et le traducteur piézoélectrique 4.

La valeur de la résistance Rc dépend de la valeur du courant de saturation des deux transistors bipolaires, de la valeur de la capacité-shunt qui est propre au traducteur et de la forme de la tension d'excitation v(t) de ce traducteur (et plus particulièrement de la valeur maximale du gradient dv/dt de cette tension d'excitation).

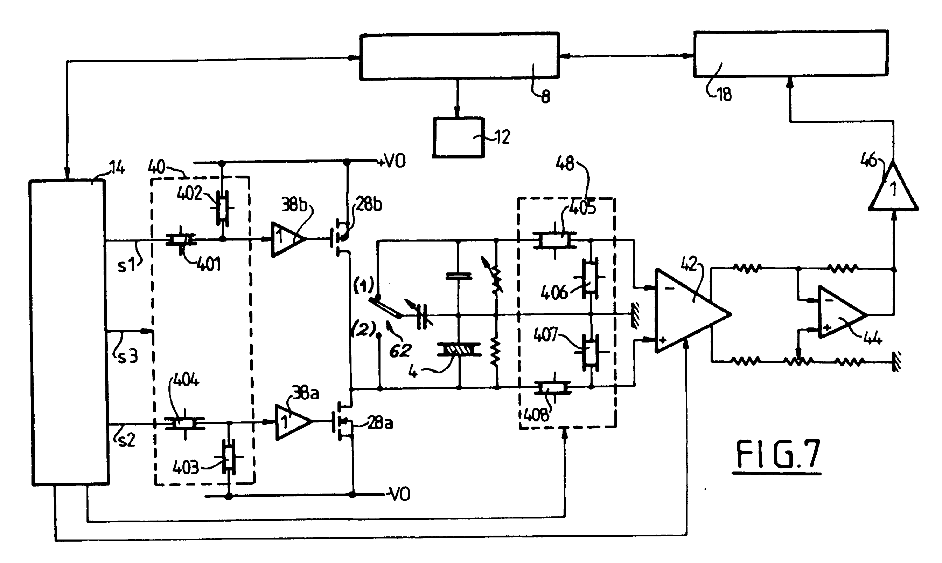

Dans le mode de réalisation particulier du système objet de l'invention, qui est schématiquement représenté sur la figure 7, le traducteur piézoélectrique est encore excité de manière dissymétrique.

Dans le système schématiquement représenté sur la figure 7, la source bidirectionnelle de courant est réalisée non pas au moyen de deux transistors bipolaires de puissance mais au moyen de deux transistors MOS de puissance.

Il s'agit des transistors 28a et 28b qui ont été décrits en se référant à la figure 3 et qui sont montés comme sur cette figure 3.

La sortie s1 du générateur 14 commande la grille du transistor 28b par l'intermédiaire de l'étage d'adaptation 38b et la sortie s2 du générateur 14 commande la grille du transistor 28a par l'intermédiaire de l'étage d'adaptation 38a.

Dans le système de la figure 7, il n'y a plus de résistance Rc ; celle des bornes du traducteur 4 qui n'est pas à la masse est reliée à une borne de l'interrupteur 62 ainsi qu'à la liaison entre les drains des transistors 28a et 28b.

De plus, dans le système de la figure 7, les quatre commutateurs élémentaires 401 à 404 du commutateur 40, qui est interposé entre le générateur 14 et les étages d'adaptation 38a et 38b, sont montés comme on l'indique ci-après.

Une borne du commutateur 401 est reliée à la sortie s1 du générateur 14 et l'autre borne de ce commutateur 401 est reliée à l'entrée de l'étage d'adaptation 38b ainsi qu'à une borne du commutateur 402 dont l'autre borne est portée au même potentiel positif +VO que la source du transistor 28b.

Une borne du commutateur 404 est reliée à la sortie s2 du générateur 14 et l'autre borne de ce commutateur 404 est reliée à l'entrée de l'étage d'adaptation 38a ainsi qu'à une borne du commutateur 403 dont l'autre borne est portée au même potentiel négatif -VO que la source du transistor 28a.

Au cours des phases d'émission, d'attente et de réception du traducteur 4, les états "ouvert" et "fermé" des quatre commutateurs 401 à 404 et des quatre commutateurs 405 à 408 sont encore ceux qui ont été indiqués plus haut.

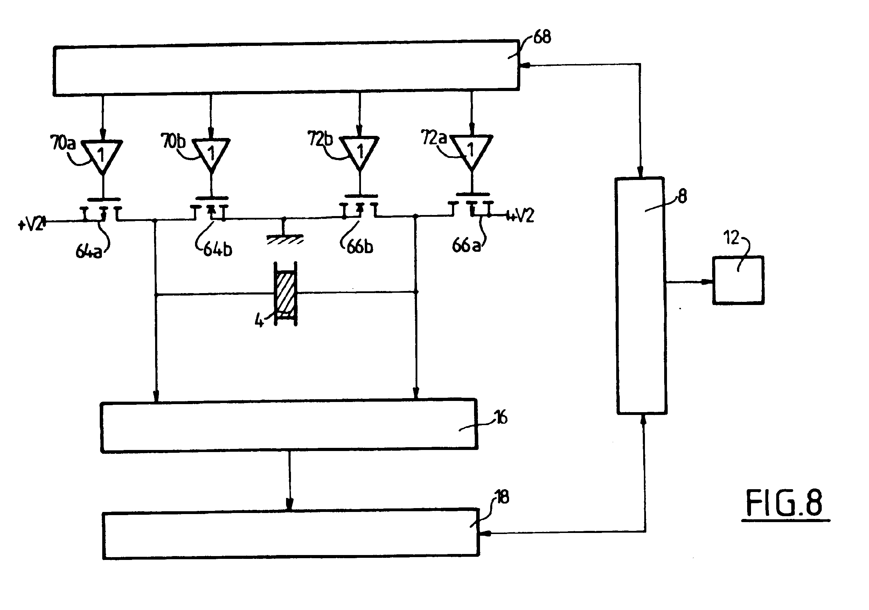

La figure 8 illustre schénatiquement un système conforme à l'invention, dans lequel le traducteur 4 est excité de manière symétrique.

Dans ce cas, on utilise deux sources bidirectionnelles de courant, chacune de ces deux sources étant réalisée à l'aide de deux sources unidirectionnelles de courant, telles que des transistors MOS de puissance par exemple, d'où un premier groupe de deux transistors MOS de puissance 64a et 64b et un deuxième groupe de deux transistors MOS de puissance 66a et 66b.

On utilise ici un générateur à quatre sorties qui porte la référence 68 et qui est commandé par le calculateur 8 (ce générateur 68 étant l'homologue du générateur 14 de la figure 3).

Ce générateur 68 est par exemple réalisable au moyen de deux générateurs de fonction arbitraire à double sortie, commercialisés par la société LECROY sous la référence 9100, et interconnectés en maire- esclave.

Pour l'accélération de la convergence de la suite mentionnée plus haut, il faut alors déterminer quatre fonctions de correction qui correspondent respectivement aux quatre transistors 64a, 64b, 66a et 66b et qui sont appliquées au signal X(t) calculé, avant l'envoi de ce dernier au générateur 68 pour exciter les sources de courant.

Les quatre sorties du générateur 68 commandent les grilles des transistors 64a, 64b, 66a et 66b respectivement par l'intermédiaire d'étages d'adaptation de puissance 70a, 70b, 72a et 72b.

Les signaux fournis par le traducteur 4 sont encore amplifiés par les moyens d'amplification 16 puis fournis au calculateur 8 par l'intermédiaire du numériseur 18.

Les transistors 64a et 66a sont des transistors MOS à canal P tandis que les transistors 64b et 66b sont des transistors MOS à canal N.

La source de chacun des transistors 64a et 66a est portée à un potentiel positif +V2 tandis que la source de chacun des transistors 64b et 66b est mise à la masse.

Enfin, les drains des transistors 64a et 64b sont tous deux reliés à une borne de traducteur piézoélectrique 4 et les drains des transistors 66a et 66b sont tous deux reliés à l'autre borne du traducteur 4.

La tension électrique qui apparaît entre les bornes du traducteur, lorsque celui-ci reçoit un écho ultrasonore, est amplifiée par les moyens d'amplification 16 et le signal ainsi amplifié est fourni au calculateur 8 par l'intermédiaire du numériseur 18.

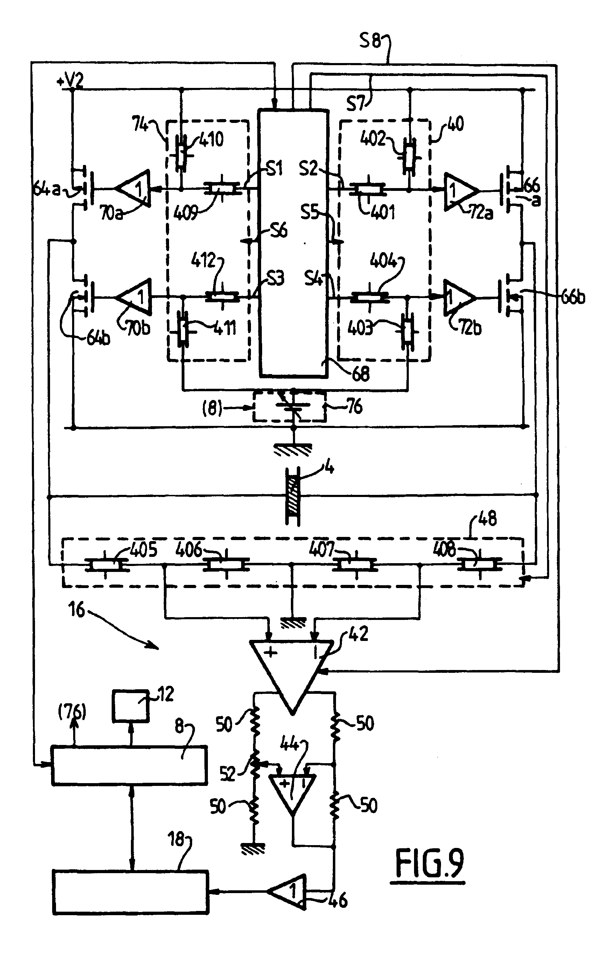

Sur la figure 9, on a représenté schématiquement un mode de réalisation particulier du système objet de l'invention, dans lequel le traducteur piézoélectrique 4 est excité de façon symétrique.

Le système schématiquement représenté sur la figure 9 comprend les transistors MOS de puissance 64a, 64b, 66a et 66b montés comme on vient de l'expliquer et respectivement commandés pu le générateur 68 par l'intermédiaire des étages d'adaptation 70a, 70b, 72a et 72b.

Les moyens d'amplification 16 qui sont utilisés dans le système schématiquement représenté sur la figure 9 comprennent encore le préamplificateur 42 et l'amplificateur 44, muni des résistances 50 et du potentiomètre 52 agencés comme on l'a expliqué dans la description de la figure 6.

Le signal issu de l'amplificateur 44 est encore fourni au numériseur 18 par l'intermédiaire de l'étage d'adaptation 46.

On utilise encore, dans le système de la figure 9, le commutateur analogique d'isolation 40 qui comporte les quatre commutateurs élémentaires 401, 402, 403 et 404, ainsi que le commutateur analogique d'isolation 48, qui comporte les quatre commutateurs élémentaires 405, 406, 407 et 408, ainsi qu'un autre commutateur analogique d'isolation 74 qui comporte également quatre commutateurs élémentaires portant les références 409,410,411 et 412.

Les quatre sorties S1, S2, S3 et S4 du générateur 68 sont respectivement reliées aux entrées des étages d'adaptation 70a, 72a, 70b et 72b.

Le commutateur 74 est monté entre les sorties S1 et S3 et les étages d'adaptation 70a et 70b tandis que le commutateur 40 est monté entre les sorties S2 et S4 et les étages d'adaptation 72a et 72b.

Le commutateur 48 est monté entre le traducteur piézoélectrique 4 et le préamplificateur 42.

On voit sur la figure 9 que le générateur 68 comporte aussi des sorties S5, S6 et S7 qui sont respectivement prévues pour fournir des signaux logiques de commande des commutateurs 40, 74 et 48, ainsi qu'une sortie S8 prévue pour la commande du gain du préamplificateur 42.

Les étages d'adaptation 70a, 70b, 72a et 72b peuvent être du genre de ceux qui sont commercialisés par la société HARRIS sous la référence HA-5002 et le commutateur 74 peut être du genre de celui qui est commercialisé par la société HARRIS sous la référence HI-201 HS.

La borne du traducteur 4, qui est reliée aux drains des transistors 64a et 64b, est également reliée à une borne du commutateur 405 dont l'autre borne est reliée au commutateur 406 ainsi qu'à l'entrée non-inverseuse du préamplificateur 42.

L'autre borne du traducteur 4, qui est reliée aux drains des transistors 66a et 66b, est également reliée à une borne du commutateur 408 dont l'autre borne est reliée à l'entrée inverseuse du préamplificateur 42 ainsi qu'à une borne du commutateur 407.

Les deux bornes restantes des commutateurs 406 et 407 sont mises à la masse.

Une borne du commutateur 401 est reliée à la sortie S2 du générateur 68 tandis que son autre borne est reliée à l'étage d'adaptation 72a ainsi qu'à une borne du commutateur 402 dont l'autre borne est portée au potentiel +V2.

Une borne du commutateur 404 est reliée à la sortie S4 du générateur 68 tandis que son autre borne est reliée à l'entrée de l'étage d'adaptation 72b ainsi qu'à une borne du commutateur 403.

Une borne du commutateur 409 est reliée à la sortie S1 du générateur 68 tandis que son autre borne est reliée à l'entrée de l'étage d'adaptation 70a ainsi qu'à une borne du commutateur 410 dont l'autre borne est portée au potentiel +V2.

Une borne du commutateur 412 est reliée à la sortie S3 du générateur 68 tandis que son autre borne est reliée à l'entrée de l'étage d'adaptation 70b ainsi qu'à une borne du commutateur 411.

Le système schématiquement représenté sur la figure 9 comprend aussi une source de tension variable 76 qui est commandée électroniquement par le calculateur et dont le bruit de fond est très inférieur à celui du générateur 68 qui, on le rappelle, a pour fonction de convertir sous forme analogique les signaux fournis par le calculateur 8 en vue de commander les transistors MOS de puissance 64a, 64b, 66a et 66b.

La borne négative de la source de tension 76 est mise à la masse tandis que la borne positive de cette source 76 est prévue pour porter les bornes restantes des commutateurs 403 et 411 à un potentiel positif vo.

La fonction des commutateurs analogiques 40 et 74, qui sont montés directement aux sorties du générateur 68, est d'isoler, pendant la phase de réception du traducteur, l'entrée de l'étage de puissance (réalisé avec les transistors MOS) du bruit de fond du générateur.

L'étage de puissance étant connecté de manière permanente au traducteur piézoélectrique 4, l'utilisation des commutateurs analogiques 40 et 74 permet de supprimer la connexion dynamique indésirable et permanente due aux capacités parasites des transistors MOS de puissance 64a, 64b, 66a et 66b et permet d'améliorer le rapport signal sur bruit de telle façon qu'il est possible de détecter des échos ultrasonores qui conduisent, entre les bornes du traducteur piézoélectrique, à une tension dont l'excursion crête à crête peut avoir une amplitude aussi faible que 10 microvolts.

On précise ci-après les états des douze commutateurs élémentaires 401 à 412 pendant les phases d'émission, d'attente et de réception du traducteur piézoélectrique 4 du système de la figure 9.

Pendant la phase d'émission, les commutateurs 401, 404, 409, 412, 406 et 407 sont fermés tandis que les commutateurs 402, 403, 410, 411, 405 et 408 sont ouverts.

Pendant la phase d'attente, les commutateurs 402, 403, 410 et 411 sont fermés, les commutateurs 406 et 407 restent fermés, les commutateurs 401, 404, 409 et 412 sont ouverts et les commutateurs 405 et 408 restent ouverts.

Pendant la phase de réception, les commutateurs 402, 403, 410 et 411 restent fermés, les commutateurs 405 et 408 sont fermés, les commutateurs 401, 404, 409 et 412 restent ouverts et les commutateurs 406 et 407 sont ouverts.

On indique ci-après la fonction de la source de tension variable 76.

Cette source permet de commander les transistors 64b et 66b pendant la phase de réception du traducteur piézoélectrique 4.

En effet, pendant cette phase de réception, les commutateurs 403 et 411 sont fermés et l'on impose donc la tension vo à la grille des transistors 70b et 72b.

Ces derniers se comportent donc comme des résistances drains-sources dont la valeur est commandée par la tension vo, ces résistances drains-sources étant connectées, en phase réception, entre la masse et les bornes du traducteur.

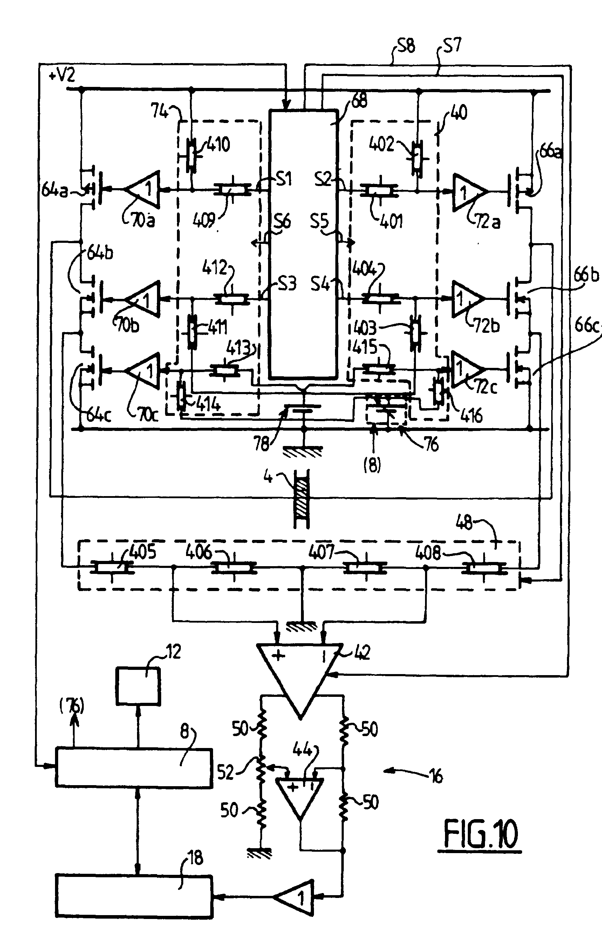

Sur la figure 10, on a représenté schématiquement un autre mode de réalisation particulier du système objet de l'invention, dans lequel le traducteur piézoélectrique 4 est encore excité de façon symétrique.

Le système schématiquement représenté sur la figure 10 diffère de celui qui est schématiquement représenté sur la figure 9 par le fait qu'il comprend deux transistors MOS de puissances supplémentaires 64c et 66c ainsi qu'une source de tension fixe 78.

De plus, dans le générateur de la figure 10, le commutateur 74 comprend deux commutateurs élémentaires supplémentaires 413 et 414.

De même, le commutateur 40 comprend deux commutateurs supplémentaires 415 et 416.

Les transistors 64b, 64c, 66b et 66c sont identiques.

On indique ci-après les changement de montage qui affectent certains éléments du système de la figure 10 par rapport au système de la figure 9.

Dans le cas du système de la figure 10, les bornes du traducteur piézoélectrique ne sont plus reespective- ment reliées aux commutateurs 405 et 408 et les sources respectives des transistors 64b et 66b ne sont plus mises à la masse.

La source du transistor 64b est reliée au drain du transistor 64c ainsi qu'à l'une des bornes du commutateur 405 (dont l'autre borne est reliée à l'entrée non-inverseuse du préamplificateur 42).

La source du transistor 66b est reliée au drain du transistor 66c ainsi qu'à l'une des bornes du commutateur 408 (dont l'autre borne est reliée à l'entrée inverseuse du préamplificateur 42).

On voit aussi que les connexions des commutateurs 403 et 411 ainsi que celles de la source de tension variable 76 sont différentes.

Une borne du commutateur 403 (dont l'autre borne est reliée au commutateur 404) est reliée à la borne positive de la source de tension 78.

Une borne du commutateur 411 (dont l'autre borne est reliée au commutateur 412) est égale ment reliée à la borne positive de la source de tension 78.

La borne négative de cette source de tension 78 ainsi que la source de chacun des transistors 64c et 66c sont mises à la masse.

De plus, le système de la figure 10 comprend deux étages d'adaptation de plus que le système de la figure 9, ces étages d'adaptation supplémentaires portant les références 70c et 72c.

Une borne du commutateur 413 est reliée à la borne positive de la source de tension 78 et l'autre borne de ce commutateur 413 est reliée à une borne du commutateur 414 ainsi qu'à l'entrée de l'étage d'adaptation 70c dont la sortie est reliée à la grille du transistor 64c.

Une borne du commutateur 415 est reliée à la borne positive de la source de tension 78 et l'autre borne de ce commutateur 415 est reliée à une borne du commutateur 416 ainsi qu'à l'entrée de l'étage d'adaptation 72c dont la sortie est reliée à la grille du transistor 66c.

Les bornes restantes des commutateurs 414 et 416 sont reliées à la borne positive de la source de tension variable 76 dont la borne négative est mise à la masse.

Les étages d'adaptation 70c et 72c sont identiques aux étages d'adaptation 70b et 72b.

On précise ci-après les états dans lesquels doivent se trouver les divers commutateurs élémentaires du système de la figure 10 lors des phases d'émission, d'attente et de réception du traducteur piézoélectrique 4.

Lors de la phase d'émission, les commutateurs 401, 404, 415, 409, 412, 413, 406 et 407 sont fermés et les commutateurs 402, 403, 416, 410, 411, 414, 405 et 408 sont ouverts.

Lors de la phase d'attente, les commutateurs 402, 403, 410 et 411 sont fermés, les commutateurs 415, 413, 406 et 407 restent fermés, les commutateurs 401, 404, 409 et 412 sont ouverts et les commutateurs 416, 414, 405 et 408 restent ouverts.

Lors de la phase de réception, les commutateurs 416, 414, 405 et 408 sont fermés, les commutateurs 402, 403, 410 et 411 restent fermés, les commutateurs 415, 413, 406 et 407 sont ouverts et les commutateurs 401, 404, 409 et 412 restent ouverts.

Pendant la phase d'émission du traducteur 4, la source de tension 78 fournit à l'entrée des étages d'adaptation 70c et 72c une tension positive v1 qui peut être de l'ordre de 15V et les transistors 64c et 66c sont conducteurs et se comportent quasiment comme des court-circuits ; la résistance drain-source de ces transistors 64c et 66c à l'état passant, résistance qui est habituellement notée Rdson, est très faible et peut être de l'ordre 10 milliohms par exemple.

Pendant cette phase d'émission du traducteur 4, les transistors 64a, 64b, 66a et 66b sont, quant à eux, commandés par les signaux issus du générateur 68.

Pendant la phase d'attente du traducteur 4, les transistors 64c et 66c se comportent encore quasiment comme des court-circuits, les transistors 64b et 66b deviennent des court-circuits (leurs résistances Rdson étant alors par exemple de l'ordre de 10 milliohms) et les transistors 64a et 66a deviennent des circuits ouverts.

Pendant la phase de réception du traducteur 4, les transistors 64c et 66c présentent une résistance Rdson plus importante, qui peut être de l'ordre de 25 ohms, les grilles de ces transistors 64c et 66c étant reliées, par l'intermédiaire des étages d'adaptation 70c et 72c et des commutateurs 414 et 416, à la borne positive de la source de tension 76 qui est réglée par la calculateur 8.

Pendant cette phase de réception, les transistors 64b et 66b sont quasiment des court-circuits et les transistors 64a et 66a sont des circuits ouverts.

Ainsi, lors de la phase d'émission, la tension appliquée entre les bornes du traducteur pour exciter celui-ci peut présenter de grandes variations sans que le préamplificateur 42 n'en soit affecté.

Lors de la phase de réception du traducteur, le bruit de fond du générateur 68, qui est présent aux sorties S1, S2, S3 et S4 de ce dernier, est empêché d'atteindre le traducteur piézoélectrique 4 par les commutateurs 40 et 74.

Dans le cas d'une excitation symétrique du traducteur piézoélectrique 4, l'excursion crête à crête de la tension d'excitation entre les bornes de ce traducteur 4 est le double de la tension d'alimentation de celui-ci, d'où l'avantage des systèmes tels que ceux qui sont représentés sur les figures 9 et 10 par rapport à des systèmes du genre de ceux qui sont représentés sur les figures 6 et 7.

On notera en outre que le système de la figure 10 présente des avantages par rapport au système de la figure 9.

En effet, l'utilisation des transistors supplémentaires 64c et 66c qui se comportent quasiment comme des court-circuits lors de la phase d'émission, donnent un niveau d'isolation supplémentaire entre le traducteur piézoélectrique 4 et les entrées du préamplificateur 42.

Il faut toutefois noter que, dans un grand nombre d'applications, le commutateur 48 utilisé dans les systèmes des figures 9 et 10 n'est pas nécessaire, ce qui permet de simplifier la réalisation de ces systèmes.

Un autre avantage du système de la figure 10 par rapport à celui de la figure 9 réside dans le fait que la tension électrique analogique présente entre les bornes du traducteur 4 lors de l'excitation de celui-ci peut dépasser la tension analogique maximale admissible par le commutateur analogique 48, du fait de l'emploi des transistors supplémentaires 64c et 66c.

La valeur du gain du préamplificateur 42 ainsi que les caractéristiques de la fenêtre temporelle d'observation (intervalle de temps pendant lequel l'écho ultrasonore est détecté), caractéristiques qui sont la largeur de cette fenêtre et le retard du début de la réception par rapport à la fin de l'émission, sont commandés par le calculateur 8.

Le temps mort nécessaire à la commutation du gain du préamplificateur 42 étant intérieur à 400 ns, il est concevable de commuter ce gain au milieu d'une même fenêtre temporelle d'observation dans les applications où cela s'avère nécessaire.

Dans les systèmes représentés sur les figures 6, 7, 9 et 10, on pourrait bien entendu accélérer la convergence de la suite mentionnée plus haut et l'on utiliserait alors le commutateur 34 de la figure 5 (associé à la résistance 32) que l'on monterait de façon à ce que la résistance 32 de la figure 5 puisse être substituée au traducteur piézoélectrique 4 sous le contrôle du calculateur 8.

Les systèmes conformes à l'invention, décrits ci-dessus, donnent un contrôle absolu du contenu temporel ou spectral du signal ultrasonore émis.

Ces systèmes permettent d'adapter le signal d'excitation du traducteur piézoélectrique quel que soit le traducteur mis en oeuvre dans le cadre d'un contrôle ultrasonore donné, et conformément au critère spécifié par l'utilisateur.

Ce critère peut être la forme temporelle de l'écho ultrasonore renvoyé par le réflecteur de référence ou bien la ou les bandes spectrales dans lesquelles l'utilisateur souhaite effectuer le contrôle.

Ces systèmes conformes à l'invention permettent donc d'effectuer des contrôles ultrasonores en large bande, en bande étroite simple ou bien en bande étroite multiple.

Avec un système conforme à l'invention, le problème de l'amortissement physique propre au traducteur piézoélectrique n'est plus critique, quelle que soit la fréquence de résonance de la pastille piézo-électrique utilisée pour la fabrication de ce traducteur et le problème classique de l'adaptation électrique qui est lié à chaque traducteur n'existe plus.

Ceci permet de réduire les difficultés et donc le coût de fabrication des traducteurs.

La partie émettrice du système est entièrement intégrable dans toutes les applications où l'on se contente d'un signal d'excitation dont la valeur maximale de l'excursion crête à crête en tension aux bornes du traducteur n'excède pas ± 20V

Pour une telle intégration, on peut utiliser la bibliothèque de cellules précaractérisées, réalisées en technologique BICMOS de la société SGS-THOMSON.

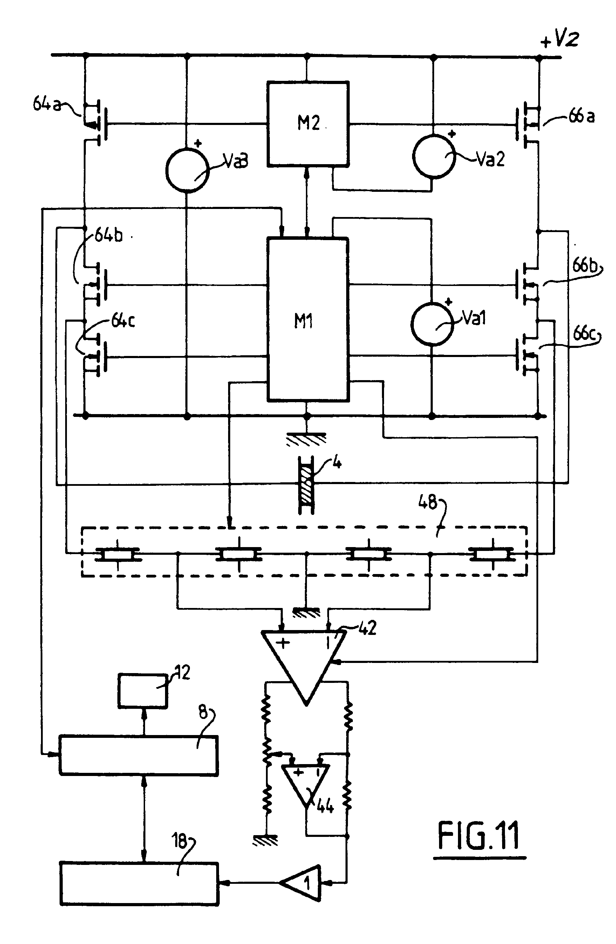

Pour les applications nécessitant un niveau d'excitation plus élevée, par exemple de ± 20V à ± 500V, la partie émettrice, c'est-à-dire, dans le cas de la figure 10, le générateur 68, les commutateurs 40 et 74 et les étages d'adaptation 70a, 70b, 70c, 72a, 72b et 72c, peut être intégrée sous la forme de deux modules M1 et M2 comme on le voit sur la figure 11.

Les sources 76 et 78 de la figure 10 ne sont pas représentées sur cette figure 11.

Le module M1, dont la référence est la masse, est chargé de commander la grille des transistors MOS de puissance à canal N et le module M2, qui est à un potentiel flottant, est chargé de commander la grille des transistors MOS de puissance à canal P.

Les tensions d'alimentation de ces deux modules M1 et M2, tensions qui sont notées Va1 et Va2, peuvent dans ces conditions être limitées à une valeur de l'ordre de 20V, ce qui autorise l'intégration avec une technologie classique.

Les sources des transistors 64a et 66a sont portés au potentiel V2 élevé grâce à une alimentation Va3.

La technologie actuelle de fabrication des transistors MOS de puissance permet d'atteindre un potentiel V2 de l'ordre de 500V tout en conservant une tension maximale de commande de grille de l'ordre de 10V et un courant impulsionnel de l'ordre de plusieurs dizaines d'ampères, associés à une résistance Rdson de l'ordre de 10 milliohms.

Pour les applications où une haute tension d'excitation et l'intégration en un unique circuit sont indispensables, la technologie haute tension dénommée HVIC et développée par la société International Rectifier est utilisable.

Dans ce cas, il est souhaitable d'intégrer également, sur un même circuit intégré, les moyens d'amplification du signal fourni par le traducteur lors de la réception de l'écho ultrasonore ainsi que le commutateur analogique d'isolation correspondant.

L'électronique complète d'émission-réception peut alors être placée tout contre la pastille piézoélectrique du traducteur, ce qui permet d'optiminer les conditions de fonctionnement de celui-ci.

A ce propos, on indique que le calculateur, le générateur de fonctions arbitraires LECROY et l'appareil de la société TEKTRONIX mentionnés plus haut pourraient bien entendu être remplacés par des moyens à fonction simplifiée, qui permettraient la mise en oeuvre des systèmes des figures 6 et 7 mais qui seraient réalisés de façon beaucoup plus compacte que les appareils susmentionnés.

La présente invention n'est pas limitée à un système qui utilise un seul traducteur pour l'émission et la réception des ultrasons au cours d'un contrôle ultrasonore.

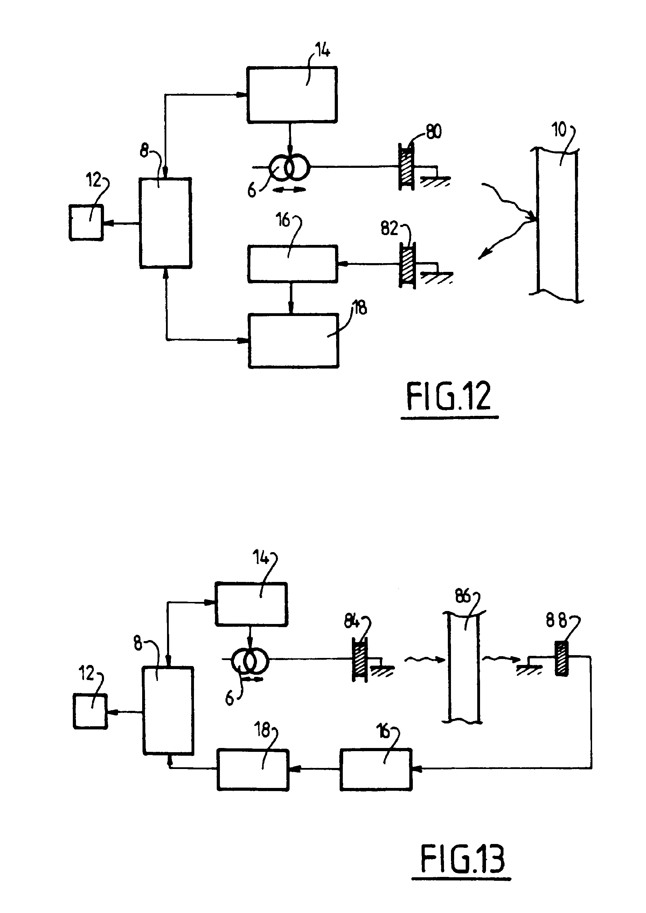

On voit sur la figure 12 un système conforme à l'invention comprenant :
- un traducteur piézoélectrique 80 qui est commandé par la source bidirectionnelle de courant 6 et qui est destiné à l'émission d'ultrasons vers le réflecteur de référence 10, et
- un autre traducteur piézoélectrique 82 qui est destiné à la réception de l'écho ultrasonore fourni par ce réflecteur de référence 10, le signal détecté par ce traducteur 82 étant ensuite fourni aux moyens d'amplification 16.

Un autre système conforme à l'invention et schématiquement représenté sur la figure 13 permet de travailler par transmission et comprend à cet effet :
- un traducteur piézoélectrique 84 qui est excité par la source bidirectionnelle de courant 6 et qui est destiné à envoyer des ultrasons vers un objet de référence 86, et
- un autre traducteur piézoélectrique 88 qui est destiné à recevoir les ultrasons transmis par l'objet de référence 86, les traducteurs 84 et 88 étant alors placés de part et l'autre de l'objet de référence 86.

Le signal détecté par le traducteur 88 est bien entendu fourni aux moyens d'amplification 16.

## Revendications

1. Système d'émission-réception d'ultrasons, ce système comprenant des moyens d'émission et de réception d'ultrasons qui comportent :
- un traducteur piézo-électrique (4) destiné au moins à l'émission d'ondes ultrasonores, et
- un générateur de courant électrique (6, 6a-6b, 28a-28b, 36a-36b, 64a-64b-66a-66b) destiné à exciter le traducteur (4) pour que celui-ci émette une onde ultrasonore,
ce système comprenant en outre des moyens électroniques de traitement (8) aptes à déterminer de façon approchée et à mémoriser au moins un signal d'excitation du générateur du courant, ce signal d'excitation étant associé à un objet de référence (10) et conduisant à une forme (Yr) déterminée d'onde ultrasonore détectée par les moyens de réception d'ultrasons, issue de cet objet après interaction de ce dernier avec l'onde ultrasonore engendrée par le traducteur à la suite de l'excitation du générateur de courant,
caractérisé en ce que les moyens électroniques de traitement (8) sont prévus pour déterminer :
- dans une étape initiale, la fonction H-¹ inverse de la fonction de transfert H du processus non linéaire qui, à un signal X d'excitation du générateur de courant (6, 6a-6b, 28a-28b, 36a-36b, 64a-64b-66a-66b), associe le signal Y=H(X) détecté par les moyens de réception, cette fonction H-¹ étant déterminée à partir d'un signal Xo d'excitation initiale du générateur de courant et du signal détecté H(Xo), en supposant, dans cette étape initiale, la fonction H linéaire et indépendante du temps, puis
- par une méthode d'itération, une approximation Xn dudit signal d'excitation associé à l'objet de référence (10), à partir d'un signal X1 pris égal à l'image, par la fonction H-¹, de la forme déterminée d'onde ultrasonore et en corrigeant, lors de chaque étape d'itération, l'approximation du signal d'excitation du générateur de courant, obtenue à l'étape précédente, par l'image, par la fonction H-¹, de l'erreur commise à cette étape précédente sur la forme déterminée d'onde ultrasonore.

2. Système selon la revendication 1, caractérisé en ce que le générateur de courant comprend au moins une source bidirectionnelle de courant électrique (6, 6a-6b, 26a-28b, 36a-36b, 64a-64b-66a-66b) pour exciter le traducteur (4).

3. Système selon la revendication 2, caractérisé en ce que chaque source bidirectionnelle est constituée par deux sources unidirectionnelles de courant électrique (6a-6b, 28a-28b, 36a-36b, 64a-64b, 66a-66b).

4. Système selon la revendication 3, caractérisé en ce que chaque source unidirectionnelle comprend un transistor MOS (28a, 28b, 64a, 64b, 66a, 66b).

5. Système selon l'une quelconque des revendications 1 à 4, caractérisé en ce que le traducteur (4) est destiné à l'émission et à la réception d'ondes ultrasonores.

6. Système selon l'une quelconque des revendications 1 à 5, caractérisé en ce que le générateur de courant (6, 6a-6b, 28a-28b, 36a-36b) est prévu pour exciter le traducteur (4) de façon dissymétrique.

7. Système selon l'une quelconque des revendications 1 à 5, caractérisé en ce que le générateur de courant comprend deux sources bidirectionnelles de courant électrique (64a-64b, 66a-66b), prévues pour exciter le traducteur (4) de façon symétrique.

8. Système selon la revendication 5 ou la revendication 5 et l'une quelconque des revendications 6 et 7, caractérisé en ce que les moyens d'émission et de réception comprennent en outre :
- des moyens (16) d'amplification des signaux détectés par ces moyens d'émission et de réception, et
- des moyens de commutation (48) aptes à isoler les moyens d'amplification (16) du traducteur (4) lorsque ce dernier émet une onde ultrasonore.

9. Système selon l'une quelconque des revendications 5 et 8 ou la revendication 5 et l'une quelconque des revendications 6 et 7, caractérisé en ce que les moyens d'émission et de réception comprennent en outre :
- des moyens (14, 68) de commande du générateur de courant (6, 6a-6b, 28a-28b, 36a-36b, 64a-64b-66a-66b), ces moyens de commande recevant en entrée des signaux issus des moyens électroniques de traitement (8) et destinés à l'excitation du générateur de courant et fournissant en sortie des signaux d'excitation du générateur de courant, et
- d'autres moyens de commutation (40, 74) aptes à isoler les moyens de commande (14, 68) du traducteur (4) lorsque ce dernier reçoit une onde ultrasonore.

10. Système selon la revendication 1 ou la revendication 1 et l'une quelconque des revendications 2 à 9, caractérisé en ce que les moyens électroniques de traitement (8) sont en outre prévus pour déterminer une transformation du signal d'excitation du générateur de courant, dont la composition avec la fonction de transfert H est approximativement linéaire.

11. Système selon la revendication 10, caractérisé en ce qu'il comprend en outre une résistance électrique (32) et un commutateur à deux positions (34), à savoir :
- une première position dans laquelle ce commutateur (34) relie le générateur de courant (6, 6a-6b, 26a-26b, 36a-36b, 64a-64b-66a-66b) à la résistance électrique (32) pour envoyer dans cette dernière le courant fourni par le générateur de courant, et
- une deuxième position dans laquelle ce commutateur (34) relie le générateur de courant au traducteur (4) pour exciter ce dernier,
et en ce que les moyens électroniques de traitement (8) sont aptes à déterminer, lorsque le commutateur (34) est dans la première position, et à mémoriser une transformation du signal d'excitation du générateur de courant, qui permet au courant fourni par ce générateur de courant de varier linéairement en fonction du signal d'excitation du générateur de courant.

## Claims

1. Ultrasonic transmission-reception system comprising ultrasonic transmission and reception means having a piezoelectric transducer (4) for at least transmitting ultrasonic waves and an electric current generator (6, 6a-6b, 28a-28b, 36a-36b, 64a-64b-66a-66b) for exciting the transducer so that it transmits an ultrasonic wave, said system also comprising electronic processing means (8) able to determine in an approximate manner and store at least one current generator exciting signal, the latter being associated with a reference object (10) and leading to a predetermined shape (Y) of the ultrasonic wave detected by the ultrasonic reception means from the said object following the interaction of the latter with the ultrasonic wave produced by the transducer as a result of the excitation of the current generator, characterized in that electronic processing means (8) are provided for determining the inverse function H-¹ of the transfer function H of the nonlinear process which, at an exciting signal X of the current generator (6, 6a-6b, 28a-28b, 36a-36b, 64a-64b-66a-66b) associates the signal Y=H(X) detected by the reception means, said function H-¹ being determined on the basis of an initial exciting signal Xo of the current generator and the detected signal H(Xo), assuming the function H to be linear and independent of time and then by an iteration method, an approximation Xn of said exciting signal associated with the reference object (10), on the basis of a signal X1 taken as equal to the image, by the function H-¹, of the given ultrasonic wave shape and by correcting, during each iteration stage, the approximation of the exciting signal of the current generator obtained in the preceding stage by the image, by the function H-¹ of the error committed in said preceding stage on the given ultrasonic wave shape.

2. System according to claim 1, characterized in that the current generator has at least one bidirectional current source (6, 6a-6b, 28a-28b, 36a-36b, 64a-64b-66a-66b) for exciting the transducer (4).

3. System according to claim 2, characterized in that each bidirectional source is constituted by two unidirectional current sources (6a-6b, 28a-28b, 36a-36b, 64a-64b, 66a-66b).

4. System according to claim 3, characterized in that each unidirectional source has a MOS transistor (28a, 28b, 64a, 64b, 66a, 66b).

5. System according to any one of the claims 1 to 4, characterized in that the transducer (4) is used for the transmission and reception of ultrasonic waves.

6. System according to any one of the claims 1 to 5, characterized in that the current generator (6, 6a-6b, 28a-28b, 36a-36b) excites the transducer (4) in an asymmetrical manner.

7. System according to any one of the claims 1 to 5, characterized in that the current generator has two bidirectional current sources (64a-64b, 66a-66b) for exciting the transducer (4) in a symmetrical manner.

8. System according to claim 5 or claim 5 and either of the claims 6 and 7, characterized in that the transmission-reception means also comprise means (16) for amplifying the signals detected by said transmission-reception means, switching means (48) for isolating the amplification (16) from the transducer (4), when the latter transmits an ultrasonic wave.

9. System according to claims 5 and 8 or claim 5 and either of the claims 6 and 7, characterized in that the transmission-reception means also comprise means (14, 68) for controlling the current generator (6, 6a-6b, 28a-28b, 36a-36b, 64a-64b-66a-66b), said control means receiving at the input signals from the electronic processing means (8) and used for exciting the current generator and supplying at the output current generator exciting signals and other switching means (40, 74) able to isolate the control means (14, 68) from the transducer (4), when the latter receives an ultrasonic wave.

10. System according to claim 1, or claim 1 and any one of the claims 2 to 9, characterized in that the electronic processing means also determine a transformation of the current generator exciting signal, whose composition is approximately linear with the transfer function H.

11. System according to claim 10, characterized in that it also has an electrical resistor (32) and a two-position switch (34), namely a first position in which said switch (34) connects the current generator (6, 6a-6b, 28a-28b, 36a-36b, 64a-64b-66a-66b) to the electrical resistor (32) to feed into the latter the current supplied by the current generator and a second position in which said switch (34) connects the current generator to the transducer (4) for exciting the latter, the electronic processing means (8) then being able to determine, when the switch (34) is in the first position, and store a transformation of the exciting signal of the current generator, which enables the current supplied by said current generator to vary linearly as a function of the current generator exciting signal.

## Patentansprüche

1. Anlage zur Erzeugung und zum Empfang von Ultraschall, wobei diese Anlage Ultraschall-Erzeugungs-und Empfangseinrichtungen enthält, die umfassen:
- einen piezoelektrischen Umsetzer (4), der wenigstens zum Erzeugen von Ultraschallwellen bestimmt ist, und
- einen Erzeuger von elektrischem Strom (6, 6a-6b, 28a-28b, 36a-36b, 64a-64b-66a-66b), der dazu bestimmt ist, den Umsetzer (4) zu erregen, damit dieser eine Ultraschallwelle erzeugt,
wobei dieses System außerdem elektronische Verarbeitungseinrichtungen (8) umfaßt, die wenigstens ein Erregungssignal des Stromerzeugers näherungsweise bestimmen und speichern können, und dieses Erregungssignal dabei einem Bezugsobjekt (10) zugeordnet ist und zu einer bestimmten Form (Yr) einer durch die Ultraschall-Empfangseinrichtungen detektierten Ultraschallwelle führt, die von diesem Objekt ausgeht, nach einer Wechselwirkung dieses letztern mit der als Folge der Erregung des Stromerzeugers durch den Umsetzer erzeugten Ultraschallwelle,
dadurch gekennzeichnet,
daß die elektronischen Verarbeitungseinrichtungen (8) vorgesehen sind, folgendes zu bestimmen:
- in einem Anfangsschritt die inverse Funktion H-¹ der Übertragungsfunktion H des nichtlinearen Prozesses, die bei einem Erregungssignal X des Stromerzeugers (6, 6a-6b, 28a-28b, 36a-36b, 64a-64b-66a-66b) das durch die Empfangseinrichtungen detektierte Signal Y=H(X) zuordnet, wobei diese Funktion H⁻¹ bestimmt wird aufgrund eines ursprünglichen Erregungssignals Xo des Stromerzeugers und des detektierten Signals H(Xo), und man die Funktion H in diesem Anfangsschritt linear und unabhängig von der Zeit annimmt, dann
- durch eine Iterationsmethode eine Annäherung Xn des genannten, dem Bezugsobjekt (10) zugeordneten Erregungssignals aufgrund eines gleich dem Bild, durch die Funktion H-¹, von der bestimmten Form der Ultraschallwelle genommenen Signals X1, und indem man bei jedem Iterationsschritt die im vorangehenden Schritt, durch das Bild, durch die Funktion H-¹, erhaltene Annäherung des Erregungssignals des Stromerzeugers von dem in diesem vorangehenden Schritt bei der bestimmten Ultraschallwellenform begangenen Fehler korrigiert.

2. Anlage nach Anspruch 1, dadurch gekennzeichnet, daß der Stromerzeuger zum Erregen des Umsetzers (4) wenigstens eine zweiseitig gerichtete Stromquelle (6, 6a-6b, 28a-28b, 36a-36b, 64a-64b-66a-66b) umfaßt.

3. Anlage nach Anspruch 2, dadurch gekennzeichnet, daß jede zweiseitig gerichtete Stromquelle durch zwei einseitig gerichtete Stromquellen (6a-6b, 28a-28b, 36a-36b, 64a-64b, 66a-66b) gebildet wird.

4. Anlage nach Anspruch 3, dadurch gekennzeichnet, daß jede einseitig gerichtete Quelle einen MOS-Transistor (28a, 28b, 64a, 64b, 66a, 66b) umfaßt.

5. Anlage nach einem der Ansprüche 1 bis 4, dadurch gekennzeichnet, daß der Umsetzer (4) zur Erzeugung und zum Empfang von Ultraschallwellen bestimmt ist.

6. Anlage nach einem der Ansprüche 1 bis 5, dadurch gekennzeichnet, daß der Stromerzeuger (6, 6a-6b, 28a-28b, 36a-36b) dazu vorgesehen ist, den Umsetzer (4) asymmetrisch zu erregen.

7. Anlage nach einem der Ansprüche 1 bis 5, dadurch gekennzeichnet, daß der Stromerzeuger zwei zweiseitig gerichtete Stromquellen (64a-64b, 66a-66b) umfaßt, die dazu vorgesehen sind, den Umsetzer (4) symmetrisch zu erregen.

8. Anlage nach Anspruch 5 oder dem Anspruch 5 und einem der Ansprüche 6 und 7, dadurch gekennzeichnet, daß die Erzeugungs- und Empfangseinrichtungen außerdem umfassen:
- Verstärkungseinrichtungen (16) der durch die Erzeugungs- und Empfangseinrichtungen detektierten Signale, und
- Schalteinrichtungen (48), um die Verstärkungseinrichtungen (16) vom Umsetzer (4) zu trennen, wenn dieser letztere eine Ultraschallwelle erzeugt.

9. Anlage nach einem der Ansprüche 5 und 8 oder dem Anspruch 5 und einem der Ansprüche 6 und 7, dadurch gekennzeichnet, daß die Erzeugungs- und Empfangseinrichtungen außerdem umfassen:
- Steuereinrichtungen (14, 68) des Stromerzeugers (6, 6a-6b, 28a-28b, 36a-36b, 64a-64b-66a-66b), wobei diese Einrichtungen als Eingang Signale empfangen, die von den elektronischen Verarbeitungseinrichtungen (8) stammen und zur Erregung des Stromerzeugers bestimmt sind, und als Ausgang Erregungssignale des Stromerzeugers liefern, und
- weitere Schalteinrichtungen (40, 74) zum Trennen der Steuereinrichtungen (14, 68) vom Umsetzer (4), wenn dieser letztere eine Ultraschallwelle empfängt.

10. Anlage nach Anspruch 1 oder dem Anspruch 1 und einem der Ansprüche 2 bis 9, dadurch gekennzeichnet, daß die elektronischen Verarbeitungseinrichtungen (8) außerdem vorgesehen sind, um eine Transformation des Erregungssignals des Stromerzeugers zu bestimmen, dessen Zusammensetzung mit der Übertragungsfunktion H annähernd linear ist.

11. Anlage nach Anspruch 10, dadurch gekennzeichnet, daß sie außerdem einen elektrischen Widerstand (32) und einen Schalter (34) mit 2 Stellungen umfaßt, nämlich:
- einer ersten Stellung, in der dieser Schalter (34) den Stromerzeuger (6, 6a-6b, 26a-26b, 36a-36b, 64a-64b-66a-66b) mit dem elektrischen Widerstand (32) verbindet, um in diesen den von dem Stromerzeuger gelieferten Strom zu senden, und
- eine zweite Stellung, in der dieser Schalter (34) den Stromerzeuger mit dem Umsetzer (4) verbindet, um diesen letzteren zu erregen,
und dadurch, daß die elektronischen Verarbeitungseinrichtungen (8) fähig sind, wenn der Schalter (34) in der ersten Stellung ist, eine Transformation des Erregungssignals des Stromerzeugers zu bestimmen und zu speichern, die dem durch diesen Stromerzeuger gelieferten Strom ermöglicht, linear in Abhängigkeit vom Erregungssignal des Stromerzeugers zu variieren.
